# EUROPEAN PATENT SPECIFICATION

(11) **EP 3 046 309 B1**
(45) Date of publication and mention of the grant of the patent: **06.03.2019**
(21) Application number: 16151144.9
(22) Date of filing: 13.01.2016
(51) Int. Cl.: H04L 29/08, G06F 3/038, H04N 5/232, H04W 4/00

(54) **METHOD, DEVICE AND SYSTEM FOR PROJECTION ON SCREEN**
VERFAHREN, VORRICHTUNG UND SYSTEM ZUR PROJEKTION AUF EINEM BILDSCHIRM
PROCÉDÉ, DISPOSITIF ET SYSTÈME POUR LA PROJECTION SUR UN ÉCRAN

(30) Priority: 15.01.2015 CN 201510020809
(43) Date of publication of application: 20.07.2016
(73) Proprietor: Xiaomi Inc., Beijing 100085 (CN)
(72) Inventor: RU, Yi, 100085 Haidian District Beijing (CN); LIANG, Xin, 100085 Haidian District Beijing (CN); WEI, Xianzhe, 100085 Haidian District Beijing (CN); CHEN, Xuetong, 100085 Haidian District Beijing (CN); WU, Guizhou, 100085 Haidian District Beijing (CN); WANG, Yongzhi, 100085 Haidian District Beijing (CN)
(74) Representative: Reeve, Nicholas Edward

(56) References cited:
- EP-A1- 2 600 679
- EP-A1- 2 806 704
- US-A1- 2014 308 898
- US-A1- 2014 354 837
- "Wi-Fi Display Technical Specification version 1.1", , 24 April 2014 (2014-04-24), XP055238797, Retrieved from the Internet: URL:https://www.wi-fi.org/discover-wi-fi/s pecifications [retrieved on 2016-01-05]

## Description

### TECHNICAL FIELD

The present disclosure generally relates to the field of smart home, and more particularly to, a method, a device and a system for projection on a screen.

### BACKGROUND

A projection technology for projecting screen information of a first electronic device onto a screen of a second electronic device has become a demand trend in smart home.

When performing projection on a screen, the first electronic device and the second electronic device shall simultaneously start particular application program installed therein upon operation by a user. After the particular application program is started, the first electronic device and the second electronic device may automatically start their own wireless fidelity peer-to-peer (WiFi P2P) connection services. The first electronic device scans, via a wireless display application program, the second electronic devices which have started the WiFi P2P connection service, and displays respective scanned second electronic devices and then a user may select one of the displayed second electronic devices. The first electronic device establishes a WiFi P2P connection between the first electronic device and the selected second electronic device upon selection of the user and performs projection on a screen after the establishment of the WiFi P2P connection. The prior art document US2014/0308898 A1 discloses such a screen sharing screen system wherein available devices are listed thanks to for example Bluetooth before establishing a Wi-Fi direct connection to share screen content.

### SUMMARY OF THE INVENTION

In order to address the problem in related arts, the present disclosure provides a method per claim 1, a device per claim 6, a system per claim 8 and a computer program product per claim 9. Preferred embodiments are described in the dependent claims.

The technical solutions provided by embodiments of the present disclosure may have the following advantageous effects:
A connection of a predetermined type with a second electronic device is automatically established according to received broadcast signals. Then, under the connection of a predetermined type, a WiFi P2P connection service of the second electronic device is started and a WiFi P2P connection is established to perform projection on a screen. The received signals of a predetermined type are sent by broadcast through the second electronic device by default, and thus there is no need to install particular application program in the first electronic device and the second electronic device, and a WiFi P2P connection is established without the user's manual operation. Thus, the present disclosure may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a block diagram showing an implementation environment involved in a method for projection on a screen according to a part of exemplary embodiments;
Fig. 2 is a flowchart showing a method for projection on a screen according to an exemplary embodiment;
Fig. 3 is a flowchart showing a method for projection on a screen according to another exemplary embodiment;
Fig. 4A is a flowchart showing a method for projection on a screen according to another exemplary embodiment;
Fig. 4B is a flowchart when a first electronic device establishes a connection of a predetermined type with a second electronic device which sends signals of a predetermined type according to another exemplary embodiment;
Figs. 4C to 4F are flowcharts when a first electronic device establishes a connection of a predetermined type with a second electronic device satisfying a preset condition among second electronic devices according to various exemplary embodiments;
Fig. 4G is a flowchart when a first electronic device performs projection on a screen of a second electronic device according to another exemplary embodiment;
Fig. 4H is a block diagram when screen information of a first electronic device is synchronously displayed on a screen of a second electronic device according to another exemplary embodiment;
Fig. 4I is a block diagram when projection is performed on two screens of two different types of second electronic devices according to another exemplary embodiment;
Fig. 5 is a block diagram showing a device for projection on a screen according to another exemplary embodiment;
Fig. 6 is a block diagram showing a device for projection on a screen according to another exemplary embodiment;
Fig. 7 is a block diagram showing a device for projection on a screen according to another exemplary embodiment;
Fig. 8 is a block diagram showing a device for projection on a screen according to another exemplary embodiment; and
Fig. 9 is a block diagram showing a device for projection on a screen according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

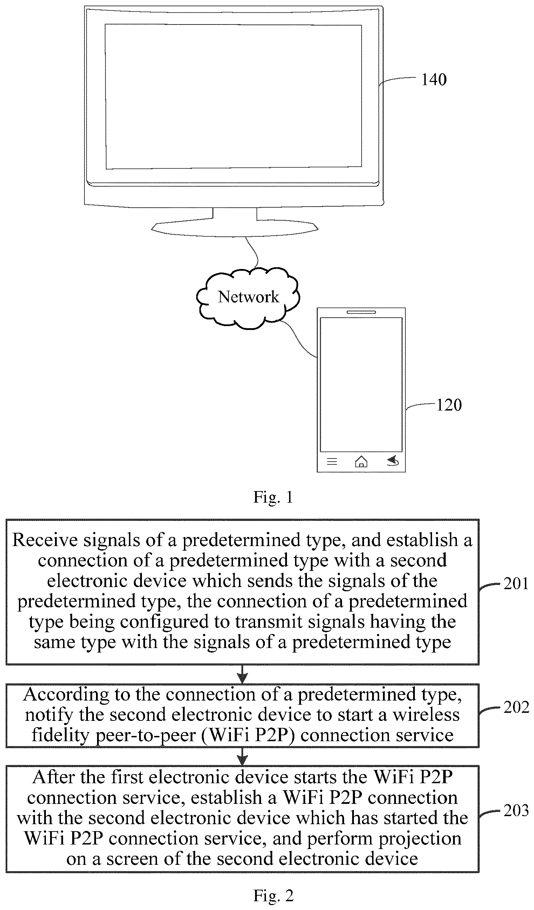

Fig. 1 is a block diagram showing an implementation environment involved in a method for projection on a screen according to a part of exemplary embodiments. As shown in Fig. 1, the implementation environment may include a first electronic device 120 and a second electronic device 140. In this context, projection includes transmitting data from a first device to a second device by wireless communication protocol, and the subsequent display of the data on the display screen under the control of the second device. The data displayed on the display screen of the second device may be data displayed on the screen of the first device (screen-sharing, or screen-projection).

The second electronic device 140 is an electronic device having a displaying function with a screen and capable of broadcasting signals of a predetermined type, for example, Bluetooth signals, Near Field Communication (NFC) signals, and the like. Generally, the second electronic device 140 has hardware devices for broadcasting signals of a predetermined type therein, for example, Bluetooth chips or NFC chips, and the like. In this context, the signals of the predetermined type can be used for establishing a connection between the first and the second device, and for allowing one of more of the first or second device to indicate to the other that screen information displayed on one device is available for viewing on the other.

The first electronic device 120 is an electronic device having a displaying function with a screen and capable of receiving the signals of a predetermined type broadcast by the second electronic device 140 and recognizing the signals of a predetermined type. Accordingly, the first electronic device 120 has receiving antennas for receiving signals of a predetermined type provided therein.

The types of the first electronic device 120 and the second electronic device 140 may be the same or not. Both the first electronic device 120 and the second electronic device 140 may be a smart phone, a tablet computer, a smart TV, an e-book reader, a multimedia player, a laptop portable computer or a desk computer and the like.

Optionally, the size of the screen of the first electronic device 120 is smaller than the size of the screen of the second electronic device 140.

Optionally, the resolution of the screen of the first electronic device 120 is smaller than the resolution of the screen of the second electronic device 140.

Fig. 2 is a flowchart showing a method for projection on a screen according to an exemplary embodiment. As shown in Fig. 2, the method for projection on a screen is applied in the first electronic device 120 in the implementation environment shown in Fig. 1 and includes the following steps.

In step 201, signals of a predetermined type are received, and a connection of a predetermined type is established with a second electronic device which sends the signals of the predetermined type. The connection of a predetermined type is configured to transmit signals having the same type with the signals of a predetermined type.

Generally, the signals of a predetermined type are sent from other devices by broadcast, and the first electronic device may receive the signals of a predetermined type sent from the other devices by broadcast.

In step 202, according to the connection of a predetermined type, the second electronic device is notified to start a WiFi P2P connection service.

In step 203, after the first electronic device starts the WiFi P2P connection service, a WiFi P2P connection is established with the second electronic device which has started the WiFi P2P connection service, and projection on a screen of the second electronic device is performed.

In conclusion, in the method for projection on a screen provided by the embodiment of the present disclosure, a connection of a predetermined type with a second electronic device is automatically established according to received broadcast signals. Then, under the connection of a predetermined type, a WiFi P2P connection service of the second electronic device is started and a WiFi P2P connection is established to perform projection on a screen. The received signals of a predetermined type are sent by broadcast through the second electronic device by default, and thus there is no need to install particular application program in the first electronic device and the second electronic device, and a WiFi P2P connection is established without user's manual operation. Thus, the present embodiment may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

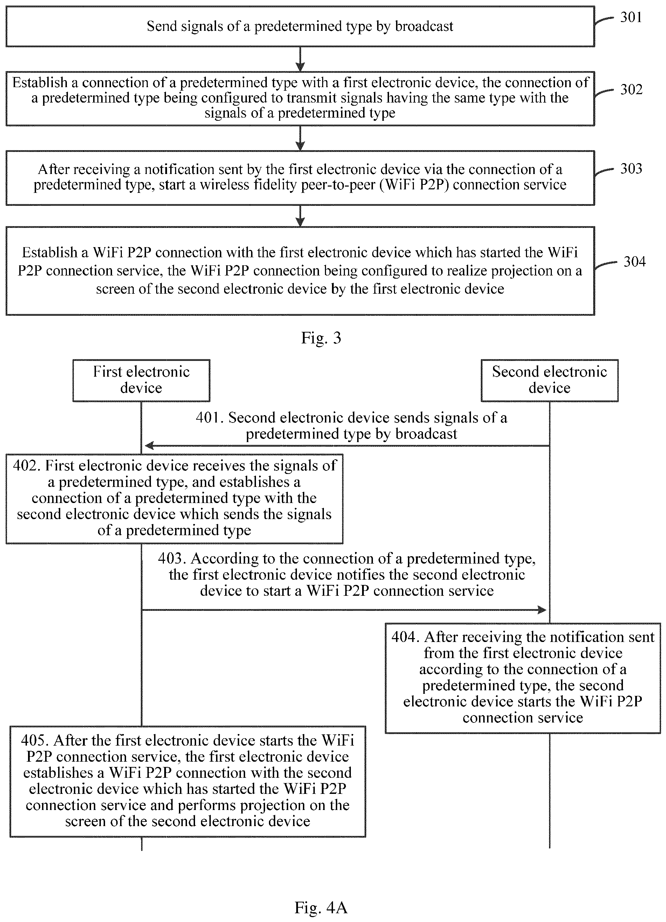

Fig. 3 is a flowchart showing a method for projection on a screen according to another exemplary embodiment. As shown in Fig. 3, the method for projection on a screen is applied in the second electronic device 140 in the implementation environment shown in Fig. 1 and includes the following steps.

In step 301, signals of a predetermined type are sent by broadcast.

In step 302, a connection of a predetermined type is established with a first electronic device. The connection of a predetermined type is configured to transmit signals having the same type with the signals of a predetermined type.

In step 303, after a notification sent by the first electronic device is received via the connection of a predetermined type, a WiFi P2P connection service is started.

In step 304, a WiFi P2P connection is established with the first electronic device which has started the WiFi P2P connection service. The WiFi P2P connection is configured to realize projection on a screen of the second electronic device by the first electronic device.

In conclusion, in the method for projection on a screen provided by the embodiment of the present disclosure, signals of a predetermined type are broadcast and thus a first electronic device may receive the signals of a predetermined type. Thereby, a connection of a predetermined type may be automatically established with a second electronic device. Then, under the connection of a predetermined type, a WiFi P2P connection service of the second electronic device is started, and a WiFi P2P connection is established to perform projection on a screen. The second electronic device may send the signals of a predetermined type by broadcast, and there is no need to install particular application program and no cumbersome operations of a user is needed. Thus, the present embodiment may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

Fig. 4A is a flowchart showing a method for projection on a screen according to another exemplary embodiment. As shown in Fig. 4A, the method for projection on a screen is applied in the implementation environment shown in Fig. 1 and includes the following steps.

In step 401, the second electronic device sends signals of a predetermined type by broadcast.

The signals of a predetermined type may be Bluetooth signals, NFC signals or WIFI frames and the like.

In practical application, the second electronic device may generally broadcast signals of a predetermined type by default, i.e., the second electronic device does not need to install particular application program for broadcasting signals of a predetermined type. Since the current electronic devices such as smart phones, smart TVs and other electronic devices in smart home have Bluetooth or NFC communication functions, these communications do not need to be manually started by a user. If the second electronic device has communication functions such as Bluetooth or NFC communication functions, the second electronic device may continuously broadcast Bluetooth signals or NFC signals by default.

In step 402, the first electronic device receives the signals of a predetermined type and establishes a connection of a predetermined type with a second electronic device which sends the signals of a predetermined type.

The first electronic device is within a predetermined range from the second electronic device and may receive the signals of a predetermined type sent from the second electronic device. Generally, when the second electronic device broadcasts the signals of a predetermined type, the distance by which the signals of a predetermined type can be transmitted is limited by the protocol corresponding to the signals of a predetermined type. For example, the transmission distance of a Bluetooth signal is typically within 10 meters, and the transmission distance of a NFC signal is typically within 10 centimeters. Thus, the first electronic device can receive the signals of a predetermined types broadcast by the second electronic device only when it is within a predetermined range from the second electronic device, that is, the first electronic device may only receive the signals of a predetermined type sent from a second electronic device which is within a predetermined range from the first electronic device.

After the first electronic device receives the signals of a predetermined type, the first electronic device may establish a connection of a predetermined type with the second electronic device which sends the signals of a predetermined type. The connection of a predetermined type here may be used for transmitting the signals having the same type with the signals of a predetermined type. For example, if the signals of a predetermined type are Bluetooth signals, the connection of a predetermined type may be a Bluetooth connection, i.e., the connection of a predetermined type may be used for transmitting the Bluetooth signals.

In step 403, the first electronic device notifies the second electronic device to start a WiFi P2P connection service according to the connection of a predetermined type.

After successful establishment of the connection of a predetermined type, the first electronic device may notify the second electronic device to start the WiFi P2P connection service according to the connection of a predetermined type. For example, the first electronic device may, according to the connection of a predetermined type, send a notification message to the second electronic device. The type of the notification message may be the same as the type of the signals of a predetermined type. The notification message is used for notifying the second electronic device to start the WiFi P2P connection service of the second electronic device.

For example, after a Bluetooth connection is established, the first electronic device may send a Bluetooth signal to the second electronic device via the established Bluetooth connection. The Bluetooth signal is used for notifying the second electronic device to start the WiFi P2P connection service. As another example, after a NFC connection is established, the first electronic device may send a NFC signal to the second electronic device via the established NFC connection. The NFC signal is used for notifying the second electronic device to start the WiFi P2P connection service.

Generally, the WiFi P2P connection service is not started by default. In order to ensure the fluency of projection on screen when the projection is realized under the WiFi P2P connection and to reduce occupancy of the band width, the WiFi P2P connection services in the first electronic device and the second electronic device which need to perform the projection shall be started firstly. In the present embodiment, the first electronic device employs the established connection of a predetermined type to notify, on its own initiative, the second electronic device to start the WiFi P2P connection service of the second electronic device.

In step 404, after receiving the notification sent from the first electronic device according to the connection of a predetermined type, the second electronic device starts the WiFi P2P connection service.

After receiving the notification sent from the first electronic device according to the connection of a predetermined type, the second electronic device starts the WiFi P2P connection service. It can be seen that, the second electronic device does not need to have particular application program for starting the WiFi P2P connection service but only needs to establish a connection of a predetermined type and to start the WiFi P2P connection service under the triggering of the first electronic device. Further, a user does not need to perform any operation in the second electronic device. Consequently, the operation flow for starting the WiFi P2P connection is simplified.

In step 405, after the first electronic device starts the WiFi P2P connection service, the first electronic device establishes a WiFi P2P connection with the second electronic device in which the WiFi P2P connection service has been started and performs projection onto a screen of the second electronic device.

After the first electronic device notifies the second electronic device to start the WiFi P2P connection service according to the established connection of a predetermined type, in order to guarantee successful establishment of WiFi P2P connection between the first electronic device and the second electronic device, the first electronic device may automatically start the WiFi P2P connection service of the first electronic device. When both the first electronic device and the second electronic device start their WiFi P2P connection services, a WiFi P2P connection may be established between the first electronic device and the second electronic device.

Thus, the first electronic device may perform projection onto a screen of the second electronic device according to the established WiFi P2P connection.

In conclusion, in the method for projection on a screen provided by the embodiment of the present disclosure, a connection of a predetermined type with a second electronic device is automatically established according to received broadcast signals. Then, under the connection of a predetermined type, a WiFi P2P connection service of the second electronic device is started and a WiFi P2P connection is established to perform projection on a screen. The received signals of a predetermined type are sent by broadcast through the second electronic device by default, and thus there is no need to install particular application program in the first electronic device and the second electronic device, and a WiFi P2P connection is established without user's manual operation. Thus, the present embodiment may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

It shall be noted that, the above steps 402, 403 and 405 may be separately implemented as a method for projection on a screen executed by the first electronic device, and the above steps 401 and 404 may be separately implemented as a method for projection on a screen executed by the second electronic device.

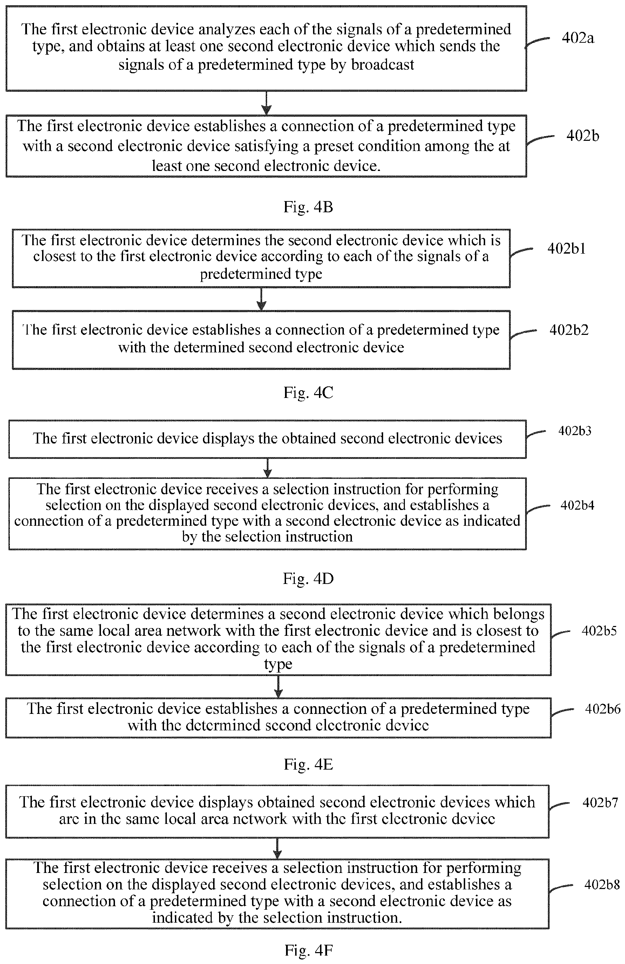

Optionally, the signals of a predetermined type received by the first electronic device may be sent from two or more second electronic devices, and in practical application scenarios, one of the second electronic devices may be selected to perform projection on a screen. That is, in step 402 in Fig. 4A, when the first electronic device receives signals of a predetermined type and establishes a connection of a predetermined type with a second electronic device which sends the signals of a predetermined type, Fig. 1B may be referred to. Fig. 4B is a flowchart when a first electronic device establishes a connection of a predetermined type with a second electronic device which sends the signals of a predetermined type according to another exemplary embodiment. In Fig. 4B, when a first electronic device establishes the connection of a predetermined type with a second electronic device which sends the signals of a predetermined type, the following steps may be included.

In step 402a, the first electronic device analyzes each of the signals of a predetermined type, and detects or obtains at least one second electronic device which sends the signals of a predetermined type by broadcast.

The signals of a predetermined type received by the first electronic device may be sent by a plurality of second electronic devices by broadcast, and thus, in order to determine or obtain the second electronic devices which send the signals of a predetermined type, the received signals of a predetermined type may be analyzed, and at least one second electronic device which send the signals of a predetermined type may be determined according to the identifier field of the sending part carried in the signals of a predetermined type.

In step 402b, the first electronic device establishes a connection of a predetermined type with a second electronic device satisfying a preset condition among the at least one second electronic device.

When the signals of a predetermine type are Bluetooth signals or NFC signals, the second electronic device satisfying a preset condition may be a second electronic device which is closest to the first electronic device among the obtained respective second electronic devices, or may be a second electronic device which is selected by a user from the obtained respective second electronic devices.

When the signals of a predetermined type are WiFi frames, the second electronic device satisfying a preset condition may be a second electronic device which belongs to the same local area network with the first electronic device and is closest to the first electronic device among the obtained respective second electronic devices, or may be a second electronic device which is selected by a user from obtained respective second electronic devices which belong to the same local area network with the first electronic device.

According to the type of the signals, the first electronic device establishes a connection of a predetermined type with a second electronic device satisfying a preset condition among the at least one second electronic device. Specifically, there may be the following four scenarios.

### First Scenario

When the signals of a predetermined type are Bluetooth signals or NFC signals, the first electronic device establishes a connection of a predetermined type with a second electronic device which is closest to the first electronic device. As shown in Fig. 4C, the following steps may be included.

In step 402b 1, the first electronic device determines the second electronic device which is closest to the first electronic device according to each of the signals of a predetermined type.

In step 402b2, the first electronic device establishes a connection of a predetermined type with the determined second electronic device.

When the first electronic device determines the second electronic device which is closest to the first electronic device according to each of the signals of a predetermined type, the following steps may be included: firstly, from the signals of a predetermined type, obtaining signal strength of each of the signals of a predetermined type and transmitting frequency for transmitting each of the signals of a predetermined type; secondly, according to the obtained signal strength of each of the signals of a predetermined type or according to the signal strength and the transmitting frequency of each of the signals of a predetermined type, determining the second electronic device which is closest to the first electronic device.

Generally, the shorter distance from the second electronic device to the first electronic device is, the stronger the strength of the signal of a predetermined type broadcast by the second electronic device and received by the first electronic device will be. Thus, the second electronic device which is closest to the first electronic device may be determined according to the signal strength of the signals of a predetermined type.

Optionally, the transmitting frequencies when respective second electronic devices broadcast the signals of a predetermined type are different, and the transmitting frequencies affect the signal strength of the signals of a predetermined type received by the first electronic device, and thus the second electronic device which is closest to the first electronic device may be determined by combination of the signal strength and transmitting frequencies corresponding to the signals of a predetermined type.

### Second Scenario

When the signals of a predetermined type are Bluetooth signals or NFC signals, the first electronic device establishes a connection of a predetermined type with a second electronic device which is selected by a user. As shown in Fig. 4D, the following steps may be included.

In step 402b3, the first electronic device displays the obtained second electronic devices.

In step 402b4, the first electronic device receives a selection instruction for performing selection among the displayed second electronic devices, and establishes a connection of a predetermined type with a second electronic device as indicated by the selection instruction.

The obtained second electronic devices are displayed on the first electronic device and the number of the obtained second electronic devices may one, two or more.

A user may perform selection on the second electronic devices displayed on the first electronic device, and accordingly, the first electronic device may receive the selection instruction for performing selection on the displayed second electronic devices, and determine the second electronic device according to the selection instruction, and establish a connection of a predetermined type with the determined second electronic device.

### Third Scenario

When the signals of a predetermined type are WiFi frames, the first electronic device establishes a connection of a predetermined type with a second electronic device satisfying a preset condition among the at least one second electronic device. As shown in Fig. 4E, the following steps may be included.

In step 402b5, the first electronic device determines a second electronic device which belongs to the same local area network with the first electronic device and is closest to the first electronic device according to each of the signals of a predetermined type.

In step 402b6, the first electronic device establishes a connection of a predetermined type with the determined second electronic device.

When the signals of a predetermined type are WiFi frames, accordingly, the available connection of a predetermined type requires the first electronic device and the second electronic device to be within the same local area network. Thus, in order to establish the connection of a predetermined type, the first electronic device needs to select a second electronic device which is in the same local area network with the first electronic device among the determined second electronic devices.

In practical applications, the first electronic device may analyze the fields in the signals of a predetermined type to obtain network identifiers representing the local area networks in which the second electronic devices reside. The first electronic device obtains the second electronic devices which have the same network identifier as that of the first electronic device according to the network identifier of itself.

Further, the first electronic device determines, from the selected second electronic devices, a second electronic device which is closest to the first electronic device. When the first electronic device determines the second electronic device which is closest to the first electronic device, the following steps may be included: from the signals of a predetermined type, obtaining signal strength of each of the signals of a predetermined type and transmitting frequency for transmitting each of the signals of a predetermined type; and according to the obtained signal strength of each of the signals of a predetermined type or according to the signal strength and the transmitting frequency of each of the signals of a predetermined type, determining the second electronic device which is closest to the first electronic device.

### Fourth Scenario

When the signals of a predetermined type are WiFi frames, the first electronic device establishes a connection of a predetermined type with a second electronic device satisfying a preset condition among the at least one second electronic device. As shown in Fig. 4F, the following steps may be included.

In step 402b7, the first electronic device displays obtained second electronic devices which are in the same local area network with the first electronic device.

In step 402b8, the first electronic device receives a selection instruction for performing selection on the displayed second electronic devices, and establishes a connection of a predetermined type with a second electronic device as indicated by the selection instruction.

When the signals of a predetermined type are WiFi frames, similarly, in order to establish the connection of a predetermined type, the first electronic device needs to select second electronic devices which are in the same local area network with the first electronic device among determined second electronic devices, and displays the selected second electronic devices.

In order to better comply with user's practical use, a selection interface may be provided for a user to perform selection on the displayed second electronic devices, or the first electronic device may display a list for presenting respective second electronic devices and a user may select a second electronic device to which the projection is performed from these second electronic devices, and accordingly, the first electronic device receives a selection instruction for performing selection on the displayed second electronic devices and determines the selected second electronic device as indicated by the selection instruction, and then establishes a connection of a predetermined type with the determined second electronic device.

In conclusion, in the method for projection on a screen provided by the embodiment of the present disclosure, a second electronic device satisfying a preset condition is selected, and a connection of a predetermined type with the second electronic device is established, and then according to the established connection of a predetermined type, the second electronic device is triggered to start a WiFi P2P connection service and a WiFi P2P connection is established to realize projection on a screen. Since the WiFi P2P connection may be established with one of the second electronic devices, which satisfies a preset condition, it can be guaranteed that only a second electronic device which satisfies a preset condition can display screen information of the first electronic device and thereby this embodiment may be better adaptive to practical use scenarios.

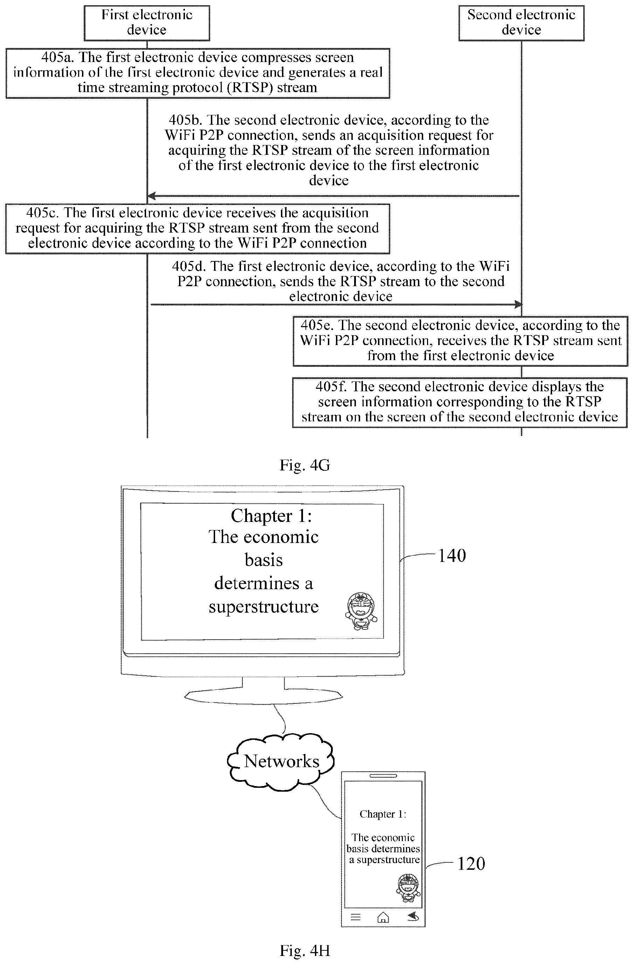

Optionally, in step 405 in Fig. 4A, when the first electronic device performs projection onto a screen of the second electronic device, Fig. 4G may be referred to, and the following steps may be included.

In step 405a, the first electronic device compresses screen information of the first electronic device and generates a real time streaming protocol (RTSP) stream.

According to protocols relating to projection on a screen, in order to quickly project screen information of the first electronic device onto the second electronic device, the first electronic device needs to compress information displayed on the screen of the first electronic device and generates an RTSP stream. And, in subsequent projection on a screen, the first electronic device continuously compresses the information recently displayed on the screen of the first electronic device to generate an RTSP stream.

In step 405b, the second electronic device, according to the WiFi P2P connection, sends an acquisition request for acquiring the RTSP stream of the screen information of the first electronic device to the first electronic device.

In practical application, after establishment of the WiFi P2P connection with the first electronic device, when it is needed to display the screen information on the screen of the first electronic device, the second electronic device may send an acquisition request for acquiring the RTSP stream to the first electronic device according to the established WiFi P2P connection.

Optionally, after establishment of the WiFi P2P connection with the second electronic device, the first electronic device may directly push the RTSP stream generated by compression to the second electronic device.

In step 405c, the first electronic device receives the acquisition request for acquiring the RTSP stream sent from the second electronic device according to the WiFi P2P connection.

In step 405d, the first electronic device, according to the WiFi P2P connection, sends the RTSP stream to the second electronic device.

The RTSP stream is configured to trigger the second electronic device to display the screen information corresponding to the RTSP stream on the screen of the second electronic device.

In step 405e, the second electronic device, according to the WiFi P2P connection, receives the RTSP stream sent from the first electronic device.

In step 405f, the second electronic device displays the screen information corresponding to the RTSP stream on the screen of the second electronic device.

Generally, in the subsequent process of projection on the screen, the first electronic device may send recently generated RTSP stream to the second electronic device in a real-time manner only if the WiFi P2P connection is not interrupted, so that the second electronic device may synchronously display the screen information of the first electronic device.

Fig. 4H is a block diagram when screen information of a first electronic device is synchronously displayed on a screen of a second electronic device according to another exemplary embodiment. In Fig. 4H, the information displayed on the screen of the second electronic device 140 and the information displayed on the screen of the first electronic device 120 are the same.

Optionally, when it is not needed to display the screen information of the first electronic device on the second electronic device, the RTSP stream sent from the first electronic device may be directly discarded, or a request for projection interruption may be sent to the first electronic device. The request for projection interruption is configured to trigger the first electronic device to interrupt compression of the screen information of the first electronic device and to interrupt sending of the RTSP stream to the second electronic device, or the WiFi P2P connection with the first electronic device may be interrupted.

In conclusion, in the method for projection on a screen provided by embodiments of the present disclosure, the screen information of the first electronic device is compressed to form an RTSP stream, and when accessed by the second electronic device, the RTSP stream is sent to the second electronic device to make the second electronic device correspondingly display the screen information of the first electronic device according to the RTSP stream. Thus, the projection of the screen information of the first electronic device onto the screen of the second electronic device is realized. Consequently, the practical viewing demand of viewing the screen information of the first electronic device on the second electronic device is satisfied.

It shall be noted that the above step 405a may be performed after the above step 405c, and the present embodiment does not impose specific limitation on the sequence of the steps 405a and 405c. The above steps 405a, 405c and 405d may be separately implemented as a method for projection on a screen executed by the first electronic device, and the above steps 405b, 405e and 405f may be separately implemented as a method for projection on a screen executed by the second electronic device.

Optionally, the first electronic device may simultaneously project the screen information onto at least two second electronic devices. That is, a second electronic device satisfying a preset condition may include respective second electronic devices determined by the first electronic device, or may be second electronic devices of a designated type determined by the first electronic device, or may be respective designated second electronic devices which are closest to the first electronic device, and determined by the first electronic device.

For example, the first electronic device may perform projection on screens of respective determined second electronic devices. As another example, the first electronic device may perform projection on a screen of a second electronic device of a designated type such as a mobile phone, or may perform projection on a screen of a second electronic device of a designated type such as a mobile phone and on a screen of a second electronic device of a designated type such as a smart TV. As another example, the first electronic device may perform projection on screens of three second electronic devices which are relatively adjacent to the first electronic device.

In practical application scenario, a user may want to synchronously display the screen information of a mobile phone (i.e., the first electronic device) held by him/her to a plurality of guests, and at this time, the screen information of the mobile phone held by the user may be projected on a TV (i.e., the second electronic device) in a sitting room so that all the other guests may obtain the screen information of the first electronic device via the TV in the sitting room. Thus, information synchronization and share are realized. Optionally, if the user wants to synchronously display the screen information of the mobile phone to a guest in a study room, the user may project the screen information of the mobile phone onto the mobile phone of the user in the study room. Thus, information synchronization and share among devices in respective rooms are realized and thereby user experience is improved.

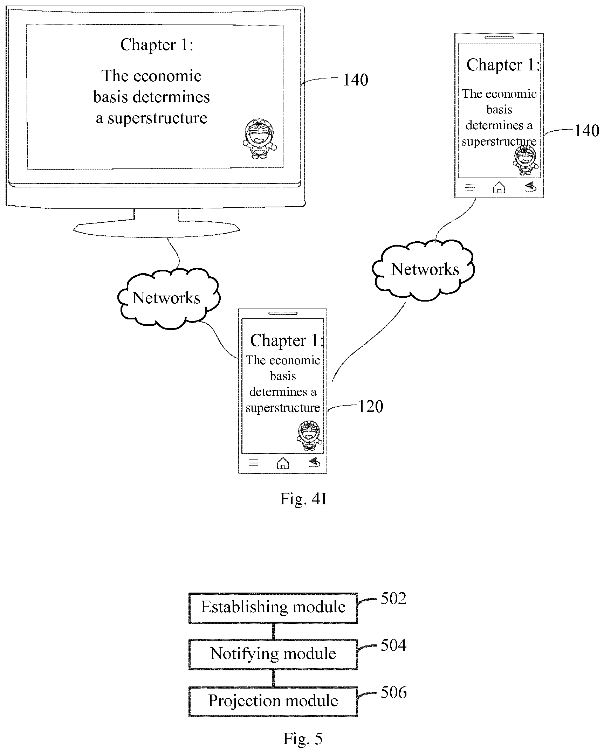

Fig. 4I is a block diagram when projection is performed on two screens of two different types of second electronic devices according to another exemplary embodiment. The first electronic device 120 concurrently projects the screen information onto a second electronic device 140 of a type of a smart TV and a second electronic device 140 of a type of a smart phone.

Embodiments of devices of the present disclosure configured to perform the above methods of the present disclosure will be described below. For the undisclosed details of the devices of the present disclosure, please see the embodiments of the methods of the present disclosure.

Fig. 5 is a block diagram showing a device for projection on a screen according to another exemplary embodiment. As shown in Fig. 5, the device for projection on a screen is applied in the first electronic device 120 in the implementation environment as shown in Fig. 1. The device for projection on a screen may be implemented as a part of the first electronic device by software, hardware or combination thereof. The device for projection on a screen may include but not limited to: an establishing module 502, a notifying module 504 and a projection module 506.

The establishing module 502 is configured to receive signals of a predetermined type, and establish a connection of a predetermined type with a second electronic device which sends the signals of the predetermined type. The connection of a predetermined type is configured to transmit signals having the same type with the signals of a predetermined type.

The notifying module 504 is configured to, according to the connection of a predetermined type established by the establishing module 502, notify the second electronic device to start a WiFi P2P connection service.

The projection module 506 is configured to, after the first electronic device starting the WiFi P2P connection service, establish a WiFi P2P connection with the second electronic device which has started the WiFi P2P connection service, and perform projection on a screen of the second electronic device.

In conclusion, in the device for projection on a screen provided by the embodiment of the present disclosure, a connection of a predetermined type with a second electronic device is automatically established according to received broadcast signals. Then, under the connection of a predetermined type, a WiFi P2P connection service of the second electronic device is started and a WiFi P2P connection is established to perform projection on a screen. The received signals of a predetermined type are sent by broadcast through the second electronic device by default, and thus there is no need to install particular application program in the first electronic device and the second electronic device, and a WiFi P2P connection is established without user's manual operation. Thus, the present embodiment may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

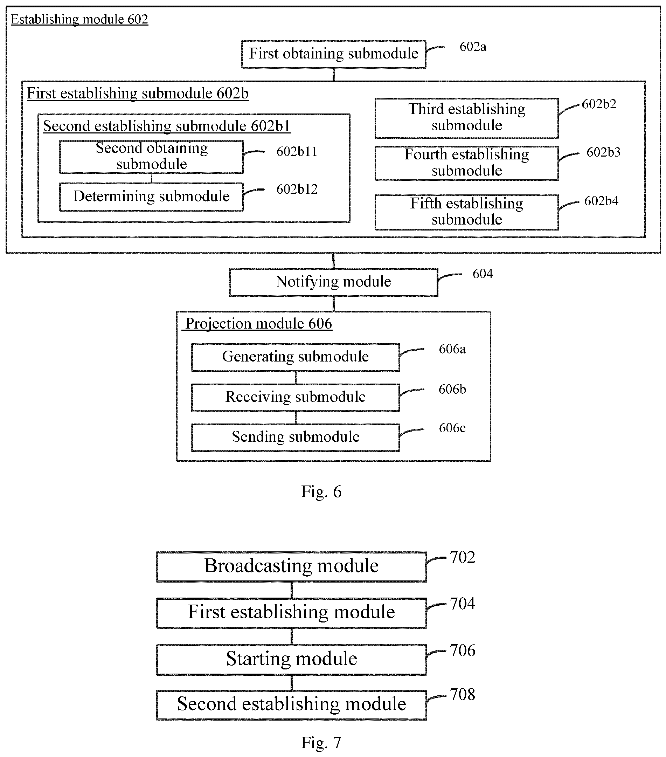

Fig. 6 is a block diagram showing a device for projection on a screen according to another exemplary embodiment. As shown in Fig. 6, the device for projection on a screen is applied in the first electronic device 120 in the implementation environment as shown in Fig. 1. The device for projection on a screen may be implemented as a part of the first electronic device by software, hardware or combination thereof. The device for projection on a screen may include but not limited to: an establishing module 602, a notifying module 604 and a projection module 606.

The establishing module 602 is configured to receive signals of a predetermined type, and establish a connection of a predetermined type with a second electronic device which sends the signals of the predetermined type. The connection of a predetermined type is configured to transmit signals having the same type with the signals of a predetermined type.

The notifying module 604 is configured to, according to the connection of a predetermined type established by the establishing module 602, notify the second electronic device to start a WiFi P2P connection service.

The projection module 606 is configured to, after the first electronic device starting the WiFi P2P connection service, establish a WiFi P2P connection with the second electronic device which has started the WiFi P2P connection service, and perform projection on a screen of the second electronic device.

In a possible implementation, the establishing module 602includes a first obtaining submodule 602a and a first establishing submodule 602b.

The first obtaining submodule 602a is configured to analyze each of the signals of a predetermined type, and obtain at least one second electronic device which sends the signals of a predetermined type by broadcast.

The first establishing submodule 602b is configured to establish the connection of a predetermined type with a second electronic device satisfying a preset condition among the at least one second electronic device obtained by the first obtaining submodule 602a.

In a possible implementation, the signals of a predetermined type are Bluetooth signals or NFC signals, and the first establishing submodule 602b includes: a second establishing submodule 602b1 configured to, according to each of the signals of a predetermined type, determine a second electronic device which is closest to the first electronic device and establish the connection of a predetermined type with the determined second electronic device; or a third establishing submodule 602b2 configured to display second electronic devices obtained by the first obtaining submodule 602a, receive a selection instruction for performing selection on the displayed second electronic devices, and establish the connection of a predetermined type with a second electronic device as indicated by the selection instruction.

In a possible implementation, the second establishing submodule 602b1 includes: a second obtaining submodule 602b11 configured to, from the signals of a predetermined type, obtain signal strength of each of the signals of a predetermined type and transmitting frequency for transmitting each of the signals of a predetermined type; and a determining submodule 602b 12 configured to, according to the obtained signal strength of each of the signals of a predetermined type or according to the signal strength and the transmitting frequency of each of the signals of a predetermined type obtained by the second obtaining submodule 602b11, determine the second electronic device which is closest to the first electronic device.

In a possible implementation, the signals of a predetermined type are WiFi signals, and the first establishing submodule 602b includes: a fourth establishing submodule 602b3 configured to, according to each of the signals of a predetermined type, determine a second electronic device which belongs to the same local area network with the first electronic device and is closest to the first electronic device, and establish the connection of a predetermined type with the determined second electronic device; or a fifth establishing submodule 602b4 configured to display second electronic devices which are obtained by the first obtaining submodule 602a and belong to the same local area network with the first electronic device, receive a selection instruction for performing selection on the displayed second electronic devices, and establish the connection of a predetermined type with a second electronic device as indicated by the selection instruction.

In a possible implementation, the projection module 606 may include a generating submodule 606a, a receiving submodule 606b and a sending submodule 606c.

The generating submodule 606a is configured to compress screen information of the first electronic device and generate an RTSP stream.

The receiving submodule 606b is configured to receive an acquisition request for acquiring the RTSP stream sent by the second electronic device via the WiFi P2P connection.

The sending submodule 606c is configured to, via the WiFi P2P connection, send the RTSP stream generated by the generating submodule to the second electronic device. The RTSP stream is configured to trigger the second electronic device to display screen information corresponding to the RTSP stream on the screen of the second electronic device.

In conclusion, in the device for projection on a screen provided by the embodiment of the present disclosure, a connection of a predetermined type with a second electronic device is automatically established according to received broadcast signals. Then, under the connection of a predetermined type, a WiFi P2P connection service of the second electronic device is started and a WiFi P2P connection is established to perform projection on a screen. The received signals of a predetermined type are sent by broadcast through the second electronic device by default, and thus there is no need to install particular application program in the first electronic device and the second electronic device, and a WiFi P2P connection is established without user's manual operation. Thus, the present embodiment may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

In the device for projection on a screen provided by the embodiment of the present disclosure, a second electronic device satisfying a preset condition is selected, and a connection of a predetermined type with the second electronic device is established, and then according to the established connection of a predetermined type, the second electronic device is triggered to start a WiFi P2P connection service and a WiFi P2P connection is established to realize projection on a screen. Since the WiFi P2P connection may be established with one of the second electronic devices, which satisfies a preset condition, it can be guaranteed that only a second electronic device which satisfies a preset condition can display screen information of the first electronic device and thereby this embodiment may be better adaptive to practical use scenarios.

In the device for projection on a screen provided by the embodiment of the present disclosure, the screen information of the first electronic device is compressed to form an RTSP stream, and when accessed by the second electronic device, the RTSP stream is sent to the second electronic device to make the second electronic device correspondingly display the screen information of the first electronic device according to the RTSP stream. Thus, the projection of the screen information of the first electronic device onto the screen of the second electronic device is realized. Consequently, the practical viewing demand of viewing the screen information of the first electronic device on the second electronic device is satisfied.

Fig. 7 is a block diagram showing a device for projection on a screen according to another exemplary embodiment. As shown in Fig. 7, the device for projection on a screen is applied in the second electronic device 140 in the implementation environment as shown in Fig. 1. The device for projection on a screen may be implemented as a part of the second electronic device by software, hardware or combination thereof. The device for projection on a screen may include but not limited to: a broadcasting module 702, a first establishing module 704, a starting module 706 and a second establishing module 708.

The broadcasting module 702 is configured to send signals of a predetermined type by broadcast.

The first establishing module 704 is configured to establish a connection of a predetermined type with a first electronic device. The connection of a predetermined type is configured to transmit signals having the same type with the signals of a predetermined type broadcast by the broadcasting module.

The starting module 706 is configured to, after receiving a notification sent by the first electronic device via the connection of a predetermined type established by the first establishing module 704, start a WiFi P2P connection service.

The second establishing module 708 is configured to establish a WiFi P2P connection with the first electronic device which has started the WiFi P2P connection service. The WiFi P2P connection is configured to realize projection on a screen of the second electronic device by the first electronic device.

In conclusion, in the device for projection on a screen provided by the embodiment of the present disclosure, signals of a predetermined type are broadcast and thus a first electronic device may receive the signals of a predetermined type. Thereby, a connection of a predetermined type may be automatically established with a second electronic device. Then, under the connection of a predetermined type, a WiFi P2P connection service of the second electronic device is started, and a WiFi P2P connection is established to perform projection on a screen. The second electronic device may send the signals of a predetermined type by broadcast, and there is no need to install particular application program and no cumbersome operations of a user is needed. Thus, the present embodiment may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

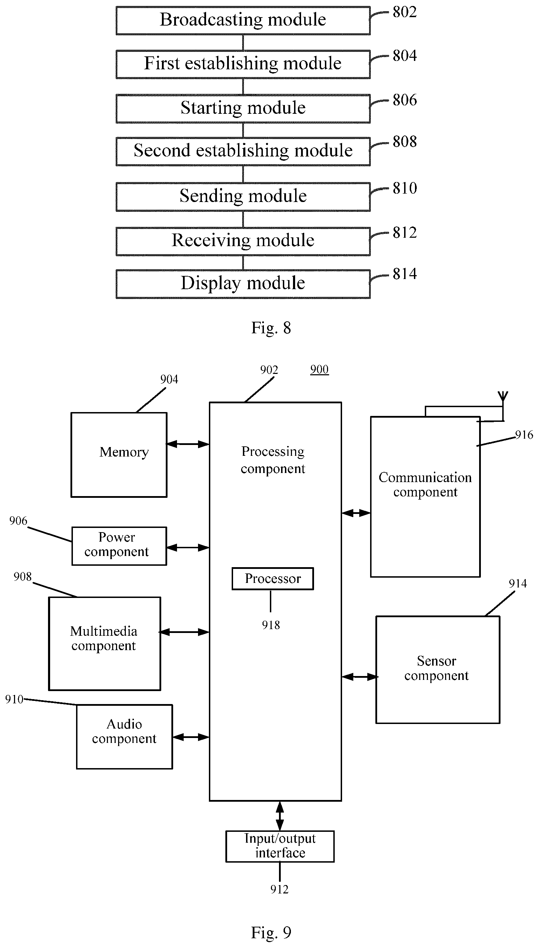

Fig. 8 is a block diagram showing a device for projection on a screen according to another exemplary embodiment. As shown in Fig. 8, the device for projection on a screen is applied in the second electronic device 140 in the implementation environment as shown in Fig. 1. The device for projection on a screen may be implemented as a part of the second electronic device by software, hardware or combination thereof. The device for projection on a screen may include but not limited to: a broadcasting module 802, a first establishing module 804, a starting module 806 and a second establishing module 808.

The broadcasting module 802 is configured to send signals of a predetermined type by broadcast.

The first establishing module 804 is configured to establish a connection of a predetermined type with a first electronic device. The connection of a predetermined type is configured to transmit signals having the same type with the signals of a predetermined type broadcast by the broadcasting module 802.

The starting module 806 is configured to, after receiving a notification sent by the first electronic device via the connection of a predetermined type established by the first establishing module 804, start a WiFi P2P connection service.

The second establishing module 808 is configured to establish a WiFi P2P connection with the first electronic device which has started the WiFi P2P connection service. The WiFi P2P connection is configured to realize projection on a screen of the second electronic device by the first electronic device.

In a possible implementation, the device for projection on a screen may further include a sending module 810, a receiving module 812 and a display module 814.

The sending module 810 is configured to, according to the WiFi P2P connection, send to the first electronic device an acquisition request for acquiring a real time streaming protocol (RTSP) stream of screen information of the first electronic device.

The receiving module 812 is configured to, according to the WiFi P2P connection, receive the RTSP stream sent from the first electronic device. The RTSP stream is obtained by compression of screen information of the first electronic device through the first electronic device.

The display module 814 is configured to display screen information corresponding to the RTSP stream on the screen of the second electronic device.

In conclusion, in the device for projection on a screen provided by the embodiment of the present disclosure, signals of a predetermined type are broadcast and thus a first electronic device may receive the signals of a predetermined type. Thereby, a connection of a predetermined type may be automatically established with a second electronic device. Then, under the connection of a predetermined type, a WiFi P2P connection service of the second electronic device is started, and a WiFi P2P connection is established to perform projection on a screen. The second electronic device may send the signals of a predetermined type by broadcast, and there is no need to install particular application program and no cumbersome operations of a user is needed. Thus, the present embodiment may solve the problem in the related arts that particular application program needs to be installed in the first electronic device and the second electronic device, a WiFi P2P connection may be established upon user's operation only after the user simultaneously starts the particular application program in the two electronic devices by user's operation, resulting in cumbersome operations and low connection efficiency when performing projection on a screen. Consequently, the WiFi P2P connection may be established automatically, the connection efficiency when performing projection on a screen may be improved and user's operations may be reduced.

With respect to the devices in the above embodiments, specific operations performed by respective modules have been described in detail in the embodiments of the methods and therefore repeated descriptions are omitted here.

An exemplary embodiment of the present disclosure provides a system for projection on a screen which includes a first electronic device and a second electronic device. The first electronic device may include the device for projection on a screen as shown in Fig. 5 or 6, and the second electronic device may include the device for projection on a screen as shown in Fig. 7 or 8. For details, please see the description regarding Figs. 5 to 8 and repeated descriptions are omitted here.

An exemplary embodiment of the present disclosure provides a device for projection on a screen which is capable of realizing the method for projection on a screen provided by the present disclosure. The device for projection on a screen is applied in a first electronic device and includes: a processor; and a memory for storing instructions executable by the processor; wherein the processor is configured to perform: receiving signals of a predetermined type, and establishing a connection of a predetermined type with a second electronic device which sends the signals of the predetermined type, the connection of a predetermined type being configured to transmit signals having the same type with the signals of a predetermined type; according to the connection of a predetermined type, notifying the second electronic device to start a WiFi P2P connection service; and after the first electronic device starting the WiFi P2P connection service, establishing a WiFi P2P connection with the second electronic device which has started the WiFi P2P connection service, and performing projection on a screen of the second electronic device.

An exemplary embodiment of the present disclosure further provides a device for projection on a screen which is capable of realizing the method for projection on a screen provided by the present disclosure. The device for projection on a screen is applied in a second electronic device and includes: a processor; and a memory for storing instructions executable by the processor; wherein the processor is configured to perform: sending signals of a predetermined type by broadcast; establishing a connection of a predetermined type with a first electronic device, the connection of a predetermined type being configured to transmit signals having the same type with the signals of a predetermined type; after receiving a notification sent by the first electronic device via the connection of a predetermined type, starting a WiFi P2P connection service; and establishing a WiFi P2P connection with the first electronic device which has started the WiFi P2P connection service, the WiFi P2P connection being configured to realize projection on a screen of the second electronic device by the first electronic device.

Fig. 9 is a block diagram showing a device for projection on a screen according to another exemplary embodiment. For example, the device 900 may be a mobile phone having a displaying function with a screen, a computer, a digital broadcast terminal, a messaging device, a gaming console, a tablet, a medical device, exercise equipment, a personal digital assistant, and the like.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 918 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 918 in the device 900, for performing the above-described methods. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the invention disclosed here. This application is intended to cover any variations, uses, or adaptations of the present disclosure following the general principles thereof and including such departures from the present disclosure as come within known or customary practice in the art. It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for sharing screen information between a first and second electronic device, wherein the method is applied in the first electronic device (120) and comprises:
receiving (201, 402) signals of a predetermined type from the second electronic device, and establishing a connection of a predetermined type with the second electronic device (140) which sends the signals of the predetermined type,
wherein the signals of the predetermined type are used to establish the connection between the first and second electronic devices and also for indicating that screen information displayed on the first electronic device is available for viewing on the second electronic device;
according to the connection of a predetermined type, notifying (202) the second electronic device (140) to start a wireless fidelity peer-to-peer (WiFi P2P) connection service; and
after the first electronic device (120) starting the WiFi P2P connection service, establishing (203, 405) a WiFi P2P connection with the second electronic device (140) which has started the WiFi P2P connection service, and performing screen- sharing of the information displayed on the first electronic device with the second electronic device (140);
wherein:
the establishing (402) of the connection of a predetermined type with the second electronic device which sends the signals of a predetermined type comprises establishing (402b) the connection of a predetermined type with a second electronic device satisfying a preset condition among the at least one second electronic device;
**characterised in that**
the signals of a predetermined type are Bluetooth signals or Near Field Communication (NFC) signals, and the establishing (402b) of the connection of a predetermined type with a second electronic device satisfying a preset condition among the at least one second electronic device comprises: according to each of the signals of a predetermined type, determining (402b1) a second electronic device which is closest to the first electronic device and establishing (402b2) the connection of a predetermined type with the determined second electronic device; or
the signals of a predetermined type are WiFi frames, and the establishing (402) of the connection of a predetermined type with a second electronic device satisfying a preset condition among the at least one second electronic device comprises: according to each of the signals of a predetermined type, determining (402b5) a second electronic device which belongs to the same local area network with the first electronic device and is closest to the first electronic device, and establishing (402b6) the connection of a predetermined type with the determined second electronic device;
wherein the determining (402b1) of the second electronic device which is closest to the first electronic device according to each of the signals of a predetermined type comprises:
from the signals of a predetermined type, obtaining the signal strength of each of the signals of a predetermined type and the transmitting frequency for transmitting each of the signals of a predetermined type; and
according to the obtained signal strength and the transmitting frequency of each of the signals of a predetermined type, determining the second electronic device which is closest to the first electronic device.

2. The method according to claim 1, **characterized in that**, the establishing (402) of the connection of a predetermined type with the second electronic device which sends the signals of a predetermined type comprises:
analyzing (402a) each of the signals of a predetermined type, and obtaining at least one second electronic device which sends the signals of a predetermined type by broadcast.

3. The method according to any one of claims 1 to 2, **characterized in that**, the performing (405) of sharing screen information between the first and the second electronic device comprises:
compressing (405a) screen information of the first electronic device and generating a real time streaming protocol (RTSP) stream;
receiving (405c) an acquisition request for acquiring the RTSP stream sent by the second electronic device via the WiFi P2P connection; and
via the WiFi P2P connection, sending (405d) the RTSP stream to the second electronic device; the RTSP stream being configured to trigger the second electronic device to display screen information corresponding to the RTSP stream on the screen of the second electronic device.

4. A method according to claim 1, wherein the method further comprises, in the second electronic device (140):
sending (301, 401) signals of a predetermined type by broadcast;
establishing (302, 402) a connection of a predetermined type with the first electronic device (120);
after receiving a notification sent by the first electronic device via the connection of a predetermined type, starting (303) a wireless fidelity peer-to-peer (WiFi P2P) connection service; and
establishing (304) a WiFi P2P connection with the first electronic device which has started the WiFi P2P connection service, the WiFi P2P connection being configured to realize the screen-sharing of the information displayed on the first electronic device to the screen of the second electronic device.

5. The method according to claim 4, **characterized in that** the method further comprises, in the second device:
according to the WiFi P2P connection, sending (405b) to the first electronic device an acquisition request for acquiring a real time streaming protocol (RTSP) stream of screen information of the first electronic device;
according to the WiFi P2P connection, receiving (405e) the RTSP stream sent from the first electronic device, the RTSP stream being obtained by compression of screen information of the first electronic device through the first electronic device; and
displaying (405f) screen information corresponding to the RTSP stream on the screen of the second electronic device.

6. A device for sharing screen information between a first and second electronic device, **characterized in that** the device is applied in the first electronic device (120) and comprises:
an establishing module (602) configured to receive signals of a predetermined type, and establish a connection of a predetermined type with the second electronic device which sends the signals of the predetermined type
wherein the establishing module is configured to use the signals of the predetermined type to establish the connection between the first and second electronic devices and also to indicate that screen information displayed on the first electronic device is available for viewing on the second electronic device;
a notifying module (604) configured to, according to the connection of a predetermined type established by the establishing module, notify the second electronic device to start a wireless fidelity peer-to-peer (WiFi P2P) connection service; and
a projection module (606) configured to, after the first electronic device starting the WiFi P2P connection service, establish a WiFi P2P connection with the second electronic device which has started the WiFi P2P connection service, and perform sharing of the information displayed on the first electronic device with the second electronic device;
wherein the establishing module (602) comprises a first establishing submodule (602b) configured to establish the connection of a predetermined type with a second electronic device satisfying a preset condition among the at least one second electronic device obtained by the first obtaining submodule;
**characterised in that**
the signals of a predetermined type are Bluetooth signals or Near Field Communication (NFC) signals, and the first establishing submodule (602b) comprises: a second establishing submodule (602b1) configured to, according to each of the signals of a predetermined type, determine a second electronic device which is closest to the first electronic device and establish the connection of a predetermined type with the determined second electronic device; or
the signals of a predetermined type are WiFi signals, and the first establishing submodule 602b includes: a fourth establishing submodule 602b3 configured to, according to each of the signals of a predetermined type, determine a second electronic device which belongs to the same local area network with the first electronic device and is closest to the first electronic device, and establish the connection of a predetermined type with the determined second electronic device;
wherein the second establishing submodule (602b1) includes: a second obtaining submodule (602b11) configured to, from the signals of a predetermined type, obtain signal strength of each of the signals of a predetermined type and transmitting frequency for transmitting each of the signals of a predetermined type; and a determining submodule (602b12) configured to, according to the signal strength and the transmitting frequency of each of the signals of a predetermined type obtained by the second obtaining submodule (602b11), determine the second electronic device which is closest to the first electronic device.

7. The device according to claim 6, **characterized in that** the establishing module (602) comprises:
a first obtaining submodule (602a) configured to analyze each of the signals of a predetermined type, and obtain at least one second electronic device which sends the signals of a predetermined type by broadcast.

8. A system comprising a device according to claim 6, and the second electronic device (140), wherein the second device comprises:
a broadcasting module (702, 802) configured to send signals of a predetermined type by broadcast;
a first establishing module (704, 804) configured to establish a connection of a predetermined type with the first electronic device,;
a starting module (706, 806) configured to, after receiving a notification sent by the first electronic device via the connection of a predetermined type established by the first establishing module, start a wireless fidelity peer-to-peer (WiFi P2P) connection service; and
a second establishing module (708, 808) configured to establish a WiFi P2P connection with the first electronic device which has started the WiFi P2P connection service, the WiFi P2P connection being configured to realize the screen-sharing of the information displayed on the first electronic device to the screen of the second electronic device.

9. A computer program product comprising instructions which, when the program is executed by a processor of a device, cause the device to carry out the steps of the method according to any one of claims 1 to 5.

## Patentansprüche

1. Verfahren zum Teilen von Bildschirminformationen zwischen einer ersten und einer zweiten elektronischen Vorrichtung, wobei das Verfahren in der ersten elektronischen Vorrichtung (120) angewendet wird und die folgenden Schritte umfasst:
Empfangen (201, 402) von Signalen eines vorbestimmten Typs von der zweiten elektronischen Vorrichtung und Einrichten einer Verbindung eines vorbestimmten Typs mit der zweiten elektronischen Vorrichtung (140), welche die Signale des vorbestimmten Typs überträgt,
wobei die Signale des vorbestimmten Typs verwendet werden, um eine Verbindung zwischen der ersten und der zweiten elektronischen Vorrichtung einzurichten, und auch um anzuzeigen, dass die auf der ersten elektronischen Vorrichtung angezeigte Bildschirminformationen zum Betrachten auf der zweiten elektronischen Vorrichtung verfügbar ist;
Informieren (202), , der zweiten elektronischen Vorrichtung, in Übereinstimmung mit dem vorbestimmten Verbindungstyp, über die Notwendigkeit, einen drahtlosen Peer-to-Peer-Dienst (WiFi P2P) zu starten; und
nachdem die erste elektronische Vorrichtung (120) den WiFi-P2P-Verbindungsdienst gestartet hat: Einrichten (203, 405) einer WiFi-P2P-Verbindung mit der zweiten elektronischen Vorrichtung (140), welche den WiFi-P2P-Verbindungsdienst gestartet hat, und Teilen der auf der ersten elektronischen Vorrichtung angezeigten Informationen mit dem Bildschirm der zweiten elektronischen Vorrichtung (140);
wobei:
das Einrichten (402) der Verbindung eines vorbestimmten Typs mit der zweiten elektronischen Vorrichtung, welche die Signale eines vorbestimmten Typs überträgt, das Einrichten (402b) einer Verbindung eines vorbestimmten Typs mit der zweiten elektronischen Vorrichtung bzw. einer von den zweiten elektronischen Vorrichtungen, die eine vorbestimmte Bedingung erfüllt, umfasst;
**dadurch gekennzeichnet, dass**
die Signale eines vorbestimmten Typs Bluetooth-Signale oder Nahfeld-Kommunikationssignale (NFC) sind, und das Einrichten (402b) der Verbindung eines vorbestimmten Typs mit einer zweiten elektronischen Vorrichtung, die eine vorbestimmte Bedingung unter der mindestens einen zweiten elektronischen Vorrichtung erfüllt, folgende Schritte umfasst: gemäß jedem der Signale eines vorbestimmten Typs: Bestimmen (402b1) einer zweiten elektronischen Vorrichtung, die der ersten elektronischen Vorrichtung am nächsten ist, und Einrichten (402b2) der Verbindung eines vorbestimmten Typs mit der bestimmten zweiten elektronischen Vorrichtung; oder
die Signale eines vorbestimmten Typs WiFi-Rahmen sind, und das Einrichten (402) der Verbindung eines vorbestimmten Typs mit einer zweiten elektronischen Vorrichtung, die eine vorbestimmte Bedingung unter der mindestens einen zweiten elektronischen Vorrichtung erfüllt, umfasst: Bestimmen (402b5) einer zweiten elektronischen Vorrichtung, die zum selben lokalen Netzwerk wie die erste elektronische Vorrichtung gehört und die der ersten elektronischen Vorrichtung am nächsten liegt, gemäß jedem der Signale eines vorbestimmten Typs und Einrichten (402b6) der Verbindung eines vorbestimmten Typs mit der bestimmten zweiten elektronischen Vorrichtung;
wobei das Bestimmen (402b1) der zweiten elektronischen Vorrichtung, welche der ersten elektronischen Vorrichtung am nächsten liegt, gemäß jedem der Signale eines vorbestimmten Typs umfasst:
Ermitteln der Signalstärke jedes Signals eines vorbestimmten Typs und der Übertragungsfrequenz zum Übertragen jedes Signals eines vorbestimmten Typs aus Signalen eines vorbestimmten Typs; und
Bestimmen der zweiten elektronischen Vorrichtung, die der ersten elektronischen Vorrichtung am nächsten liegt, gemäß der ermittelten Signalstärke und der Übertragungsfrequenz jedes Signals eines bestimmten Typs.

2. Verfahren nach Anspruch 1, **dadurch gekennzeichnet, dass** das Einrichten (402) der Verbindung eines vorbestimmten Typs mit der zweiten elektronischen Vorrichtung, welche die Signale eines vorbestimmten Typs sendet, Folgendes umfasst:
Analysieren (402a) jedes der Signale eines vorbestimmten Typs und Ermitteln von mindestens einer zweiten elektronischen Vorrichtung, welche die Signale eines vorbestimmten Typs durch Broadcasting sendet.

3. Verfahren nach einem der Ansprüche 1 bis 2, **dadurch gekennzeichnet, dass** das Ausführen (405) des Teilens der Bildschirminformation zwischen der ersten und der zweiten elektronischen Vorrichtung umfasst:
Komprimieren (405a) von Bildschirminformationen der ersten elektronischen Vorrichtung und Erzeugen eines Echtzeit-Streaming-Protokoll-Stroms (RTSP);
Empfangen (405c) einer Erfassungsanforderung zum Erfassen des von der zweiten elektronischen Vorrichtung über eine WiFi-P2P-Verbindung gesendeten RTSP-Stroms; und
Senden (405d), über die WiFi-P2P-Verbindung, des RTSP-Stroms an die zweite elektronische Vorrichtung, wobei der RTSP-Strom konfiguriert ist, die zweite elektronische Vorrichtung zum Anzeigen von Bildschirminformationen entsprechend dem RTSP-Strom auf dem Bildschirm der zweiten elektronischen Vorrichtung zu auszulösen.

4. Verfahren nach Anspruch 1, wobei das Verfahren ferner folgende Schritte in der zweiten elektronischen Vorrichtung (140) umfasst:
Senden (301, 401) von Signalen eines vorbestimmten Typs durch Broadcasting;
Einrichten (302, 402) einer Verbindung eines vorbestimmten Typs mit der ersten elektronischen Vorrichtung (120);
Starten (303) eines drahtlosen Peer-to-Peer-Verbindungsdiensts (WiFi P2P) nach dem Empfang einer Benachrichtigung, die von der ersten elektronischen Vorrichtung über die Verbindung eines vorbestimmten Typs gesendet wurde; und
Einrichten (304) einer WiFi P2P-Verbindung mit der ersten elektronischen Vorrichtung, die den WiFi P2P-Verbindungsdienst gestartet hat, wobei die WiFi P2P-Verbindung konfiguriert ist, um das Teilen der auf der ersten elektronischen Vorrichtung angezeigten Bildschirminformationen mit dem Bildschirm der zweiten elektronischen Vorrichtung zu verwirklichen.

5. Verfahren nach Anspruch 4, **dadurch gekennzeichnet, dass** das Verfahren in der zweiten Vorrichtung ferner Folgendes umfasst:
Senden (405b), in Übereinstimmung mit der WiFi-P2P-Verbindung, einer Erfassungsanforderung an die erste elektronische Vorrichtungzum Erfassen eines Echtzeit-Streaming-Protokoll-Stroms (RTSP) von Bildschirminformationen der ersten elektronischen Vorrichtung;
Empfangen (405e), in Übereinstimmung mit der WiFi-P2P-Verbindung, des RTSP-Stroms von der ersten elektronischen Vorrichtung, wobei der RTSP-Strom durch Komprimieren der Bildschirminformation der ersten elektronischen Vorrichtung mittels der ersten elektronischen Vorrichtung erhalten wird; und
Anzeigen (405f) von Bildschirminformationen, die dem RTSP-Strom entsprechen, auf dem Bildschirm der zweiten elektronischen Vorrichtung.

6. Vorrichtung zum Teilen von Bildschirminformationen zwischen der ersten und der zweiten elektronischen Vorrichtung, **dadurch gekennzeichnet, dass** die Vorrichtung in der ersten elektronischen Vorrichtung (120) verwendet wird und Folgendes umfasst:
ein Einrichtungsmodul (602), das so konfiguriert ist, dass es Signale eines vorbestimmten Typs empfängt und eine Verbindung eines vorbestimmten Typs mit einer zweiten elektronischen Vorrichtung einrichtet, die die Signale des vorbestimmten Typs sendet;
wobei das Einrichtungsmodul konfiguriert ist, Signale des vorbestimmten Typs zu verwenden, um eine Verbindung zwischen der ersten und der zweiten elektronischen Vorrichtung einzurichten, sowie anzuzeigen, dass Bildschirminformationen, die auf der ersten elektronischen Vorrichtung angezeigt werden, zum Betrachten auf der zweiten elektronischen Vorrichtung verfügbar sind;
ein Benachrichtigungsmodul (604), das konfiguriert ist, um gemäß der Verbindung eines vorbestimmten Typs, die durch das Einrichtungsmodul eingerichtet wurde, die zweite elektronische Vorrichtung zu benachrichtigen, dass der drahtlose Peer-to-Peer-Verbindungsdienst (WiFi P2P) gestartet werden soll; und
ein Projektionsmodul (606), das konfiguriert ist, eine WiFi-P2P-Verbindung mit der zweiten elektronischen Vorrichtung, die den WiFi-P2P-Verbindungsdienst gestartet hat, einzurichten, nachdem die erste elektronische Vorrichtung den WiFi-P2P-Verbindungsdienst gestartet hat, und das Teilen der auf der ersten elektronischen Vorrichtung angezeigten Informationen mit der zweiten elektronischen Vorrichtung durchzuführen;
wobei das Einrichtungsmodul (602) ein erstes Einrichtungs-Submodul (602b) umfasst, das konfiguriert ist, um eine Verbindung eines vorbestimmten Typs mit der zweiten elektronischen Vorrichtung einzurichten, die eine vorbestimmte Bedingung unter mindestens der zweiten elektronischen Vorrichtung erfüllt, die durch das erste Ermittlungs-Submodul ermittelt wird;
**dadurch gekennzeichnet, dass**
die Signale des vorbestimmten Typs Bluetooth-Signale oder Nahfeld-Kommunikationssignale (NFC) sind und das erste Einrichtungs-Submodul (602b) umfasst: ein zweites Einrichtungs-Submodul (602b1), das konfiguriert ist, um gemäß jedem der Signale eines vorbestimmten Typs eine zweite elektronische Vorrichtung zu bestimmen, die der ersten elektronischen Vorrichtung am nächsten ist, und die Verbindung eines vorbestimmten Typs mit der bestimmten zweiten elektronischen Vorrichtung einzurichten; oder
die Signale eines vorbestimmten Typs WiFi-Signale sind und das erste Einrichtungs-Submodul 602b enthält: ein viertes Einrichtungs-Submodul 602b3, welches konfiguriert ist, um gemäß jedem der Signale eines vorbestimmten Typs eine zweite elektronische Vorrichtung zu bestimmen, die zum selben lokalen Netzwerk wie die erste elektronische Vorrichtung gehört und der ersten elektronischen Vorrichtung am nächsten liegt, und die Verbindung eines vorbestimmten Typs mit der zweiten elektronischen Vorrichtung einzurichten;
wobei das zweite Einrichtungs-Submodul (602b1) umfasst: ein zweites Ermittlungs-Submodul (602b11), welches konfiguriert ist, um aus Signalen eines vorbestimmten Typs die Signalstärke jedes Signals eines vorbestimmten Typs und die Übertragungsfrequenz zum Übertragen jedes der Signale zu ermitteln; und ein Bestimmungs-Submodul (602b12), welches konfiguriert ist, um gemäß der Signalstärke und der Übertragungsfrequenz jedes der Signale eines vorbestimmten Typs, welche durch das zweite Ermittlungs-Submodul (602b11) ermittelt wurden, die zweite elektronische Vorrichtung zu bestimmen, welche der ersten elektronischen Vorrichtung am nächsten liegt.

7. Vorrichtung nach Anspruch 6, **dadurch gekennzeichnet, dass** das Einrichtungsmodul (602) enthält:
ein erstes Ermittlungs-Submodul (602a), das konfiguriert ist, um jedes der Signale eines vorbestimmten Typs zu analysieren und mindestens eine zweite elektronische Vorrichtung zu ermitteln, welche die Signale eines vorbestimmten Typs über Broadcasting überträgt.

8. System, umfassend eine Vorrichtung nach Anspruch 6 und die zweite elektronische Vorrichtung (140), wobei die zweite Vorrichtung umfasst:
ein Broadcasting-Modul (702, (802), das so konfiguriert ist, dass es Signale eines vorbestimmten Typs durch Broadcasting überträgt;
ein erstes Einrichtungsmodul (704, 804), das konfiguriert ist, um eine Verbindung eines vorbestimmten Typs mit der ersten elektronischen Vorrichtung einzurichten;
ein Startmodul (706, 806), das konfiguriert ist, um nach Empfang einer Benachrichtigung, die von der ersten elektronischen Vorrichtung über die Verbindung eines vorbestimmten Typs gesendet wurde, die durch das erste Einrichtungsmodul eingerichtet wurde, einen drahtlosen Peer-to-Peer-Verbindungsdienst (WiFi P2P) zu starten; und
ein zweites Einrichtungsmodul (708, 808), zum Einrichten einer WiFi P2P-Verbindung mit der ersten elektronischen Vorrichtung, die den WiFi P2P-Verbindungsdienst gestartet hat, wobei die WiFi P2P-Verbindung konfiguriert ist, um das Teilen der auf der ersten elektronischen Vorrichtung angezeigten Informationen mit dem Bildschirm der zweiten elektronischen Vorrichtung auszuführen.

9. Computerprogrammprodukt, umfassend Anweisungen, welche, wenn das Programm durch den Prozessor einer Vorrichtung ausgeführt wird, die Vorrichtung dazu veranlassen, die Schritte des Verfahrens nach einem der Ansprüche 1 bis 5 auszuführen.

## Revendications

1. Procédé de partage d'informations d'écran entre un premier et un second dispositifs électroniques, le procédé étant appliqué dans le premier dispositif électronique (120) et comprenant:
la réception (201, 402) de signaux d'un type prédéterminé à partir du second dispositif électronique, et l'établissement d'une connexion d'un type prédéterminé avec le second dispositif électronique (140) qui envoie les signaux du type prédéterminé,
les signaux du type prédéterminé étant utilisés pour établir la connexion entre le premier et le second dispositifs électroniques et également pour indiquer que des informations d'écran affichées sur le premier dispositif électronique peuvent être visualisées sur le second dispositif électronique ;
conformément à la connexion d'un type prédéterminé, la notification (202) au second dispositif électronique (140) du lancement d'un service de connexion WiFi de poste à poste (WiFi P2P) ; et
après que le premier dispositif électronique (120) a lancé le service de connexion WiFi P2P, l'établissement (203, 405) d'une connexion WiFi P2P avec le second dispositif électronique (140) qui a lancé le service de connexion WiFi P2P, et l'exécution d'un partage d'écran des informations affichées sur le premier dispositif électronique avec le second dispositif électronique (140) ;
dans lequel:
l'établissement (402) de la connexion d'un type prédéterminé avec le second dispositif électronique qui envoie les signaux d'un type prédéterminé comprend l'établissement (402b) de la connexion d'un type prédéterminé avec un second dispositif électronique satisfaisant une condition prédéfinie parmi l'au moins un second dispositif électronique ;
**caractérisé en ce que**
les signaux d'un type prédéterminé sont des signaux Bluetooth ou des signaux de communication en champ proche (NFC), et l'établissement (402b) de la connexion d'un type prédéterminé avec un second dispositif électronique satisfaisant une condition prédéfinie parmi l'au moins un second dispositif électronique comprend : conformément à chacun des signaux d'un type prédéterminé, la détermination (402b1) d'un second dispositif électronique qui est le plus proche du premier dispositif électronique et l'établissement (402b2) de la connexion d'un type prédéterminé avec le second dispositif électronique déterminé ; ou
les signaux d'un type prédéterminé sont des trames WiFi, et l'établissement (402) de la connexion d'un type prédéterminé avec un second dispositif électronique satisfaisant une condition prédéfinie parmi l'au moins un second dispositif électronique comprend : conformément à chacun des signaux d'un type prédéterminé, la détermination (402b5) d'un second dispositif électronique qui appartient au même réseau local que le premier dispositif électronique et qui est le plus proche du premier dispositif électronique, et l'établissement (402b6) de la connexion d'un type prédéterminé avec le second dispositif électronique déterminé ;
la détermination (402b1) du second dispositif électronique qui est le plus proche du premier dispositif électronique conformément à chacun des signaux d'un type prédéterminé comprenant :
à partir des signaux d'un type prédéterminé, l'obtention de la puissance de signal de chacun des signaux d'un type prédéterminé et la fréquence d'émission pour transmettre chacun des signaux d'un type prédéterminé ; et
conformément à la puissance de signal obtenue et à la fréquence d'émission de chacun des signaux d'un type prédéterminé, déterminer le second dispositif électronique qui est le plus proche du premier dispositif électronique.

2. Procédé selon la revendication 1, **caractérisé en ce que** l'établissement (402) de la connexion d'un type prédéterminé avec le second dispositif électronique qui envoie les signaux d'un type prédéterminé comprend :
l'analyse (402a) de chacun des signaux d'un type prédéterminé et l'obtention d'au moins un second dispositif électronique qui envoie les signaux d'un type prédéterminé par diffusion.

3. Procédé selon l'une quelconque des revendications 1 et 2, **caractérisé en ce que**, l'exécution (405) d'un partage d'informations d'écran entre le premier et le second dispositifs électroniques comprend :
la compression (405a) d'informations d'écran du premier dispositif électronique et la génération d'un flux de protocole de diffusion en temps réel (RTSP) ;
la réception (405c) d'une demande d'acquisition pour acquérir le flux RTSP envoyé par le second dispositif électronique par l'intermédiaire de la connexion WiFi P2P ; et
par l'intermédiaire de la connexion WiFi P2P, l'envoi (405d) du flux RTSP au second dispositif électronique ; le flux RTSP étant configuré pour déclencher le second dispositif électronique afin d'afficher des informations d'écran correspondant au flux RTSP sur l'écran du second dispositif électronique.

4. Procédé selon la revendication 1, le procédé comprenant en outre, dans le second dispositif électronique (140) :
l'envoi (301, 401) de signaux d'un type prédéterminé par diffusion ;
l'établissement (302, 402) d'une connexion d'un type prédéterminé avec le premier dispositif électronique (120) ;
après la réception d'une notification envoyée par le premier dispositif électronique par l'intermédiaire de la connexion d'un type prédéterminé, le lancement (303) d'un service de connexion WiFi de poste à poste (WiFi P2P) ; et
l'établissement (304) d'une connexion WiFi P2P avec le premier dispositif électronique qui a lancé le service de connexion WiFi P2P, la connexion WiFi P2P étant configurée pour réaliser le partage d'écran des informations affichées sur le premier dispositif électronique sur l'écran du second dispositif électronique.

5. Procédé selon la revendication 4, **caractérisé en ce que** le procédé comprend en outre, dans le second dispositif :
conformément à la connexion WiFi P2P, l'envoi (405b) au premier dispositif électronique d'une demande d'acquisition pour acquérir un flux de protocole de diffusion en temps réel (RTSP) d'informations d'écran du premier dispositif électronique ;
conformément à la connexion WiFi P2P, la réception (405c) du flux RTSP envoyé depuis le premier dispositif électronique, le flux RTSP étant obtenu par compression d'informations d'écran du premier dispositif électronique par l'intermédiaire du premier dispositif électronique ; et
l'affichage (405f) d'informations d'écran correspondant au flux RTSP sur l'écran du second dispositif électronique.

6. Dispositif de partage d'informations d'écran entre un premier et un second dispositifs électroniques, **caractérisé en ce que** le dispositif est appliqué dans le premier dispositif électronique (120) et comprend :
un module d'établissement (602) configuré pour recevoir des signaux d'un type prédéterminé et établir une connexion d'un type prédéterminé avec le second dispositif électronique qui envoie les signaux du type prédéterminé
le module d'établissement étant configuré pour utiliser les signaux du type prédéterminé pour établir la connexion entre le premier et le second dispositifs électroniques et également pour indiquer que des informations d'écran affichées sur le premier dispositif électronique peuvent être visualisées sur le second dispositif électronique ;
un module de notification (604) configuré, conformément à la connexion d'un type prédéterminé établie par le module d'établissement, pour notifier au second dispositif électronique le lancement d'un service de connexion WiFi de poste à poste (WiFi P2P) ; et
un module de projection (606) configuré, après que le premier dispositif électronique a lancé le service de connexion WiFi P2P, pour l'établissement d'une connexion WiFi P2P avec le second dispositif électronique qui a lancé le service de connexion WiFi P2P, et l'exécution d'un partage des informations affichées sur le premier dispositif électronique avec le second dispositif électronique ;
le module d'établissement (602) comprenant un premier sous-module d'établissement (602b) configuré pour établir la connexion d'un type prédéterminé avec un second dispositif électronique satisfaisant une condition prédéfinie parmi l'au moins un second dispositif électronique obtenu par le premier sous-module d'obtention ;
**caractérisé en ce que**
les signaux d'un type prédéterminé sont des signaux Bluetooth ou des signaux de communication en champ proche (NFC), et le premier sous-module d'établissement (602b) comprend : un second sous-module d'établissement (602b1) configuré, conformément à chacun des signaux d'un type prédéterminé, pour déterminer un second dispositif électronique qui est le plus proche du premier dispositif électronique et pour établir la connexion d'un type prédéterminé avec le second dispositif électronique déterminé ; ou
les signaux d'un type prédéterminé sont des signaux WiFi et le premier sous-module d'établissement 602b comprend : un quatrième sous-module d'établissement 602b3 configuré, conformément à chacun des signaux d'un type prédéterminé, pour déterminer un second dispositif électronique qui appartient au même réseau local que le premier dispositif électronique et qui est le plus proche du premier dispositif électronique, et pour établir la connexion d'un type prédéterminé avec le second dispositif électronique déterminé ;
le second sous-module d'établissement (602b1) comprenant: un second sous-module d'obtention (602b11) configuré, à partir des signaux d'un type prédéterminé, pour obtenir une puissance de signal de chacun des signaux d'un type prédéterminé et une fréquence d'émission pour transmettre chacun des signaux d'un type prédéterminé ; et un sous-module de détermination (602b12) configuré, conformément à la puissance de signal et à la fréquence d'émission de chacun des signaux d'un type prédéterminé obtenues par le second sous-module d'obtention (602b11), pour déterminer le second dispositif électronique qui est le plus proche du premier dispositif électronique.

7. Dispositif selon la revendication 6, **caractérisé en ce que** le module d'établissement (602) comprend :
un premier sous-module d'obtention (602a) configuré pour analyser chacun des signaux d'un type prédéterminé et pour obtenir au moins un second dispositif électronique qui envoie les signaux d'un type prédéterminé par diffusion.

8. Système comprenant un dispositif selon la revendication 6 et le second dispositif électronique (140), le second dispositif comprenant :
un module de diffusion (702, 802) configuré pour envoyer des signaux d'un type prédéterminé par diffusion ;
un premier module d'établissement (704, 804) configuré pour établir une connexion d'un type prédéterminé avec le premier dispositif électronique ;
un module de lancement (706, 806) configuré, après la réception d'une notification envoyée par le premier dispositif électronique par l'intermédiaire de la connexion d'un type prédéterminé établie par le premier module d'établissement, pour lancer un service de connexion WiFi de poste à poste (WiFi P2P) ; et
un second module d'établissement (708, 808) configuré pour établir une connexion WiFi P2P avec le premier dispositif électronique qui a lancé le service de connexion WiFi P2P, la connexion WiFi P2P étant configurée pour réaliser le partage d'écran des informations affichées sur le premier dispositif électronique sur l'écran du second dispositif électronique.

9. Produit de programme informatique comprenant des instructions qui, lorsque le programme est exécuté par un processeur d'un dispositif, entraînent l'exécution par le dispositif des étapes du procédé selon l'une quelconque des revendications 1 à 5.
